# FASCICULE DE BREVET EUROPEEN

(11) **EP 0 836 685 B1**
(45) Date de publication et mention de la délivrance du brevet: **02.10.2002**
(21) Numéro de dépôt: 97916496.9
(22) Date de dépôt: 25.03.1997
(51) Int. Cl.: F16F 1/32, F16D 23/14

(54) **MONTAGE DE BUTEE DE DEBRAYAGE**
BEFESTIGUNG EINES KUPPLUNGSRÜCKLAGERS
CLUTCH RELEASE BEARING MOUNTING

(30) Priorité: 25.03.1996 FR 9603692
(43) Date de publication de la demande: 22.04.1998
(73) Titulaire: VALEO, 75017 Paris (FR)
(72) Inventeur: DOREMUS, Olivier, F-62690 Izel-lez-Hameau (FR)
(74) Mandataire: Gamonal, Didier
(86) Numéro de dépôt international: FR9700528
(87) Numéro de publication internationale: WO97036119

(56) Documents cités:
- FR-A- 2 660 035
- GB-A- 2 265 430
- US-A- 4 646 901
- MACHINE DESIGN, vol. 54, no. 6, Mars 1982, USA, pages 89-92, XP002019961 GREENHILL, M.: "NEW OPTIONS FOR WAVE SPRINGS"
- PATENT ABSTRACTS OF JAPAN vol. 96, no. 001 & JP 08 021471 A (NHK SPRING CO LTD), 23 Janvier 1996,
- PATENT ABSTRACTS OF JAPAN vol. 096, no. 001, 31 Janvier 1996 & JP 07 248035 A (NHK SPRING CO LTD), 26 Septembre 1995,
- PATENT ABSTRACTS OF JAPAN vol. 012, no. 120 (M-685), 14 Avril 1988 & JP 62 246630 A (DAIKIN MFG CO LTD), 27 Octobre 1987,

## Description

L'invention se rapporte à un montage de butée de débrayage, plus particulièrement pour une butée de débrayage dotée d'un élément d'attaque agencé pour agir en traction sur la face intérieure d'un dispositif débrayeur tel que le diaphragme d'un embrayage.

Elle concerne plus particulièrement un perfectionnement des moyens élastiques à action axiale chargés de maintenir une certaine sollicitation axiale entre les éléments assurant le couplage de ladite butée de débrayage et dudit dispositif débrayeur.

On connaît un montage de butée de débrayage, notamment pour véhicule automobile, dans lequel la butée de débrayage est couplée à l'organe débrayeur formant diaphragme par l'intermédiaire d'une pièce d'accostage globalement annulaire et attelée au centre du diaphragme. Cette pièce d'accostage présente une partie en forme de douille traversant l'ouverture centrale du diaphragme et entourant un élément d'attaque, en forme de manchon, de la butée de débrayage. L'extrémité libre de cet élément d'attaque, engagée dans la douille, encore appelée nez, comporte une partie tronconique prolongée par une gorge de montage à fond cylindrique. Cet agencement permet un montage à encliquetage par rapprochement axial des deux sous-ensembles. Pour ce faire, un'organe de verrouillage comportant une partie en forme de jonc annulaire, radialement déformable élastiquement, est porté intérieurement par ladite pièce d'accostage pour solidarisation en rotation de celle-ci audit élément d'attaque. La partie en forme de jonc annulaire est montée dans la gorge de montage et est interposée axialement entre une portée, que présente l'alésage interne de la douille et le flanc, dit flanc d'action, de la gorge de montage le plus proche de l'extrémité libre dudit nez. Les efforts de débrayage - par action en traction de l'élément d'attaque sur la pièce d'accostage formant élément de liaison - transitent donc par le jonc. En outre, des moyens élastiques de maintien sont prémontés sur l'élément d'attaque et agissent axialement entre une face de butée portée par l'élément d'attaque et l'extrémité libre de la pièce d'accostage de façon à bloquer en permanence l'organe de couplage entre le flanc d'action et la portée tronconique de la douille, pour notamment réduire les usures.

Les moyens élastiques de maintien peuvent être constitués par au moins une rondelle élastique ondulée. Le plus souvent au moins deux rondelles élastiques ondulées sont assemblées de façon à ne présenter qu'un nombre limité de points de contact entre elles au voisinage d'extremum de leurs ondulations.

La réalisation de telles rondelles élastiques est complexe. A titre d'exemple, un mode de réalisation est décrit dans le document FR 2 692 949 (US-A-5 295 566). Dans cet exemple, les moyens élastiques de maintien se composent de deux rondelles élastiques qui forment par avance un ensemble unitaire. Celui-ci comporte deux anneaux ondulés rattachés l'un à l'autre par une patte et les deux anneaux ondulés sont repliés l'un contre l'autre. Une autre solution consiste à assembler, par exemple par soudure, deux rondelles ondulées à au moins l'un des points de contact de ceux-ci. Ces rondelles doivent être munies de pattes s'étendant radialement vers l'intérieur, pour assurer le centrage des moyens élastiques par rapport à l'élément d'attaque et permettre leur insertion dans une gorge de maintien par montage à force axialement à partir de l'extrémité libre du nez de l'élément d'attaque.

Cette gorge de maintien est délimitée par la face de butée.

Avant montage de la butée de débrayage sur la pièce d'accostage équipée de l'organe de verrouillage, les rondelles élastiques de maintien, prémontées sur l'élément d'attaque, sont imperdables du fait qu'elles sont maintenues prisonnières entre la face de butée, formant l'un des flancs de la gorge de maintien, dont le fond assure le centrage des rondelles élastiques de maintien, et une face de contrebutée, formant l'autre flanc de ladite gorge. La face de butée est axialement la plus éloignée de l'extrémité libre de l'élément d'attaque que ne l'est la face de contrebutée. Cette face de butée est donc éloignée axialement par rapport au flanc d'action de l'organe de verrouillage.

Par conséquent, le découpage et la conformation de la ou les rondelles élastiques est complexe notamment pour la réalisation des pattes radiales et nécessite un outillage relativement coûteux. Le diamètre de ces rondelles est plus important que nécessaire, ce qui engendre une perte de matériau. Le montage ou le démontage à force, est difficile. Enfin, la face de butée, contre laquelle les moyens élastiques de maintien prennent appui, doit être usinée d'une façon particulière, avec un arrondi propre à épouser les pattes, légèrement courbées axialement, qui viennent prendre appui contre cette face.

L'invention permet d'éviter tous ces inconvénients en proposant une nouvelle structure de rondelle élastique ondulée à la fois plus simple à fabriquer et plus facile à monter.

Plus précisément, l'invention concerne donc un montage de butée de débrayage, notamment pour véhicule automobile, comprenant un organe débrayeur d'un embrayage, tel qu'un diaphragme, une butée de débrayage couplée audit organe débrayeur par l'intermédiaire d'une pièce d'accostage montée sur ledit organe débrayeur et présentant une partie en forme de douille entourant un élément d'attaque en forme de manchon de ladite butée de débrayage, ledit élément d'attaque comportant une extrémité libre, un organe de verrouillage porté intérieurement par ladite pièce d'accostage pour solidarisation en rotation de celle-ci audit élément d'attaque, cet organe de verrouillage comportant une partie en forme de jonc annulaire interposée axialement entre une portée de ladite douille et un flanc d'action d'une gorge de montage pratiquée dans une partie de l'élément d'attaque qui pénètre axialement dans ladite douille et des moyens élastiques de maintien prémontés dans une gorge de maintien, que présente l'élément d'attaque, et agissant axialement entre ladite pièce d'accostage et une face de butée, formant le flanc de la gorge de maintien le plus éloigné axialement de l'extrémité libre de l'élément d'attaque, pour bloquer en permanence ledit organe de couplage entre ledit flanc d'action et la portée de ladite douille, caractérisé en ce que lesdits moyens élastiques de maintien comportent une rondelle élastique ondulée, ouverte, dont les extrémités peuvent être écartées pour permettre sa mise en place dans ladite gorge de maintien, et en ce que le diamètre intérieur de ladite rondelle à l'état non contraint est sensiblement inférieur ou égal au diamètre de fond de la gorge de maintien, pour un montage serré de ladite rondelle.

De préférence, la rondelle élastique comporte plus d'une spire à ondulations et à contacts crête à crête, les contacts entre spires adjacentes s'établissant entre des extremum desdites ondulations.

Un mode de réalisation avantageux comporte pratiquement deux spires complètes. Chaque spire comporte de préférence quatre ondulations, définissant donc quatre points de contact entre spires adjacentes. Bien entendu, en variante, on peut prévoir deux ondulations, voir trois au plus de quatre ondulations.

Le montage d'une telle rondelle élastique ondulée se fait très simplement et sans effort en écartant légèrement une extrémité pour pouvoir l'engager dans la gorge de maintien et en "vissant" la rondelle jusqu'à ce que celle-ci se retrouve entièrement installée dans la gorge de maintien. Par ce type de montage, les pattes radiales n'ont plus de raison d'exister. Le diamètre intérieur de la rondelle, à l'état non contraint (à l'état prémonté sur la butée), est sensiblement égal au diamètre de fond de la gorge de maintien, le centrage se faisant par tout le bord intérieur de la rondelle.

En variante son diamètre intérieur peut être légèrement inférieur au diamètre de fond de la gorge de maintien.

Dans ces deux cas, on obtient un meilleur maintien de la rondelle élastique ondulée dans sa gorge de maintien ce qui permet de réduire la hauteur de la face de contrebutée et de rendre plus résistant l'élément d'attaque.

En outrer puisque les pattes sont supprimées, le flanc de la gorge de maintien contre lequel la rondelle prend appui peut être un flanc à front raide, plus facile à usiner.

Dans une forme de réalisation les gorges de montage et de maintien sont confondues, la gorge de montage étant rallongée à cet effet. En variante elles sont distinctes.

L'invention sera mieux comprise et d'autres avantages de celle-ci apparaîtront plus clairement à la lumière de la description qui va suivre d'un montage de butée de débrayage conforme à son principe, donnée uniquement à titre d'exemple et faite en référence aux dessins annexés dans lesquels :
- la figure 1 est une demi coupe axiale d'un montage de butée de débrayage conforme à l'invention ;
- la figure 2 est une demi coupe axiale de la seule butée de débrayage, avant accouplement au diaphragme, les moyens élastiques de maintien étant prémontés sur celle-ci ;
- la figure 3 est une vue en perspective de la rondelle élastique ondulée conforme au perfectionnement de l'invention ;
- la figure 4 est une vue en perspective de cette rondelle lorsque les spires sont légèrement et provisoirement écartées, pour permettre son montage, sans effort, dans la gorge de la pièce d'accostage ;
- la figure 5 est une coupe diamétrale d'une variante de rondelle élastique conforme à l'invention ;

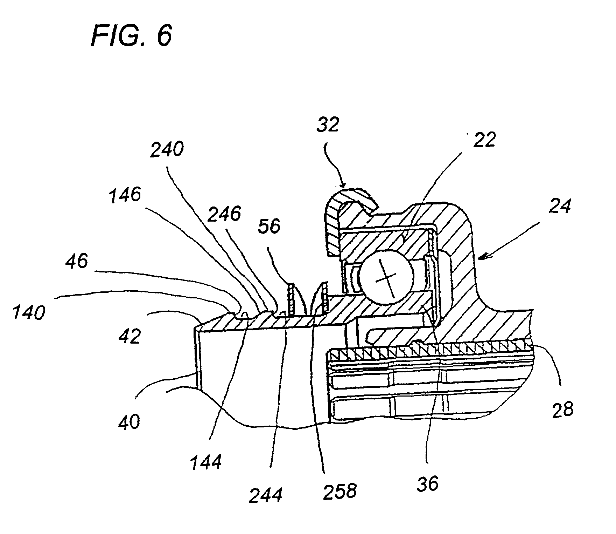

- la figure 6 est une vue analogue à la figure 2 pour un autre exemple de réalisation.

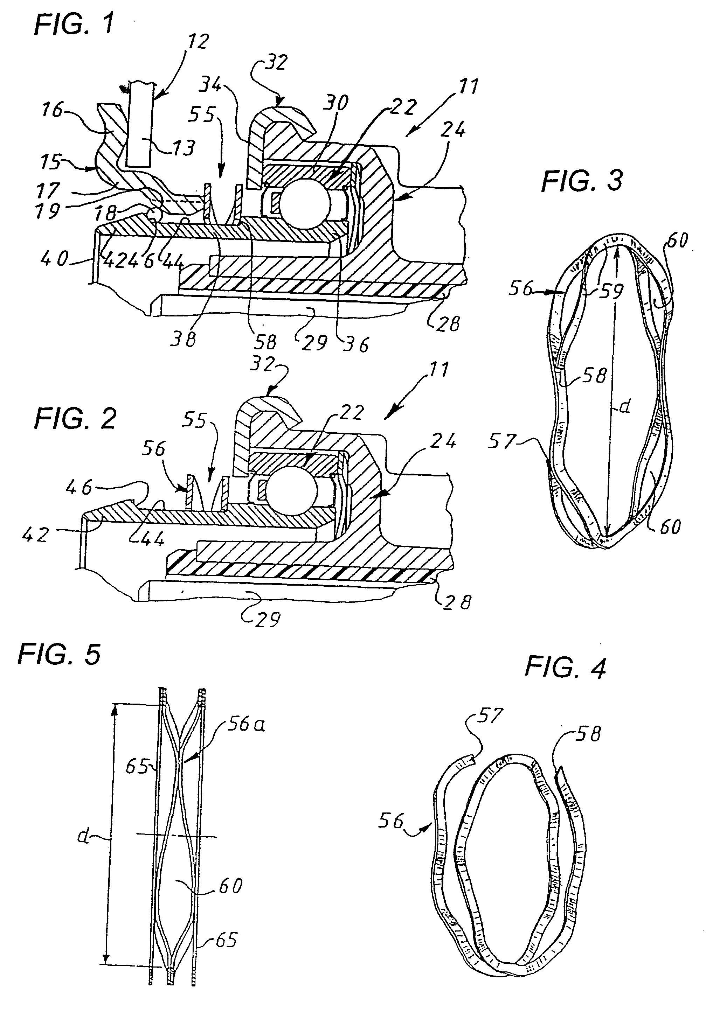

En considérant plus particulièrement la figure 1, on a représenté une butée de débrayage 11 et son attelage à l'organe débrayeur 12 d'un embrayage à friction. L'organe débrayeur 12 est un diaphragme métallique, centralement ouvert, formant ressort à action axiale, grâce à sa partie périphérique en forme de rondelle Belleville, et comportant une pluralité de doigts 13 s'étendant globalement radialement vers l'intérieur à partir de la rondelle Belleville. Ces doigts 13 forment des leviers de débrayage. Une pièce d'accostage 15, en tôle emboutie, est portée par l'ensemble des doigts 13. Elle est donc montée sur le diaphragme à la périphérie interne de celui-ci et solidaire en rotation de celui-ci en son centre, à l'aide de pattes axiales, connues en soi, non visibles sur les dessins. De telles pattes sont décrites par exemple dans les documents FR-A-2 653 194 et US-A-5 113 989, auxquels on pourra se reporter pour plus de précisions. En variante comme à la figure 1 de ces documents et comme décrit dans le document FR-A-2 630 174 le montage peut être réalisé à l'aide d'une rondelle élastique accrochée aux pattes axiales.

La pièce d'accostage 15, dite aussi coupelle d'appui, comporte, d'une part, du côté de la face interne de l'organe débrayeur 12 opposé à la butée 11, une collerette annulaire 16, ici sinueuse, coopérant localement avec la face interne des doigts 13 de l'organe débrayeur 12 et, d'autre part, une douille centrale 17 globalement d'orientation axiale, d'un seul tenant avec la collerette 16 et portant un organe de verrouillage 18 qui s'étend annulairement à l'intérieur de la douille 17. L'organe de verrouillage 18 est élastiquement déformable radialement. Il comporte une partie en forme de jonc annulaire non fermé, et deux branches radiales non visibles sur les dessins et décrites dans le document FR-A-2 630 174 précité auquel on pourra se reporter. Cet agencement permet un attelage de la butée de débrayage 11 par simple encliquetage. Cet attelage s'effectue de manière connue, par rapprochement relatif d'un premier sous-ensemble solidaire du moteur du véhicule automobile et comportant l'embrayage avec son organe débrayeur 12 portant la pièce d'accostage 15 et d'un second sous-ensemble comportant la boîte de vitesses avec la butée de débrayage 11 portée par celle-ci.

Plus précisément ici, la collerette 16, d'orientation transversale, est bombée pour prendre appui localement sur l'extrémité interne des doigts 13 du diaphragme tandis que la douille 17, d'orientation approximativement axiale traverse l'ouverture centrale du diaphragme et présente une portée intérieure formant un épaulement 19, sensiblement tronconique, défini par un changement de diamètre de la douille 17. Cette dernière est intérieurement étagée et comporte une zone de plus grand diamètre se raccordant par une portion arrondie à la collerette et par une zone tronconique (formant l'épaulement 19) à une portion extrême, de plus petit diamètre délimitant l'extrémité libre de la pièce d'accostage 15. L'organe de verrouillage 18, plus particulièrement le jonc annulaire de celui-ci coopère avec l'épaulement 19 pour l'attelage entre la butée de débrayage et le diaphragme, comme on le verra plus loin.

La butée de débrayage 11 est pour l'essentiel classique, elle comporte un roulement à billes 22 et un élément de manoeuvre 24 en forme générale de manchon solidaire de l'une des bagues 30,36 du roulement à billes 22. Une fourchette de débrayage non représentée coopère avec cet élément de manoeuvre 24, lequel est solidaire d'une douille 28 en matériau antifriction, montée coulissante par un système de cannelures sur un tube-guide 29, solidaire de la boîte de vitesses et entourant l'arbre d'entrée de celle-ci. En variante l'élément de manoeuvre 24 peut appartenir au piston d'une butée de débrayage à commande hydraulique. Le roulement à billes 22 est solidarisé par sa bague extérieure 30 non tournante à l'élément de manoeuvre par l'intermédiaire d'un capot annulaire 32 en tôle emboutie, serti à un flasque transversal de l'élément de manoeuvre 24 et présentant un rebord 34 rabattu radialement sur un côté de la bague extérieure. Un ressort d'autocentrage prend appui sur l'élément de manoeuvre 24 et sur la bague extérieure 30 pour solliciter ladite bague au contact du rebord 34.

Bien entendu la présence de ce ressort n'est pas indispensable, la bague 30 étant alors en contact avec l'élément de manoeuvre.

L'élément de manoeuvre 24 présente par exemple, comme décrit dans le document US-A-5,295,566, des oreilles pour action des doigts d'une fourchette de débrayage agissant en traction sur la butée de débrayage.

La bague intérieure tournante 36 du roulement se prolonge, ici d'un seul tenant, en direction du diaphragme 12 par un élément en forme de manchon, appelé ici élément d'attaque 38 et comprenant, à partir de son extrémité axiale libre 40 une portée tronconique d'engagement ou "nez" 42 et une gorge 44, adjacente, ici à fond cylindrique. Un flanc annulaire 46, formant flanc d'action, est ainsi défini entre le bord de plus grand diamètre de la partie tronconique 42 et le fond cylindrique de la gorge 44, dite gorge de montage. Ici une portée cylindrique d'orientation axiale relie le nez 42 au flanc d'action 46 (figure 2). Le diamètre externe de cette portée est égal au jeu de montage près au diamètre interne de la portion extrême de plus petit diamètre de la douille 17.

Comme mentionné précédemment, l'organe de verrouillage 18 comporte deux branches de préhension traversant chacune un évidement de la douille 17. Elles sont crochetées élastiquement l'une sur l'autre pour que le jonc 18 se trouve refermé circonférentiellement sur lui-même sous contrainte, dans la gorge 44. Autrement dit, la pièce d'accostage 15 et la butée de débrayage 11 sont attelées, notamment à rotation, l'une à l'autre par le fait que le jonc se trouve intercalé et bloqué axialement entre le flanc d'action 46 de l'élément d'attaque 38 et l'épaulement tronconique 19 de la douille 17. Pour libérer la butée de débrayage, il suffit de décrocheter les deux branches de l'organe de verrouillage, ce qui permet au jonc de s'échapper de la gorge de montage 44.

Des moyens élastiques de maintien 55 sont logés dans la gorge 44 et agissent axialement entre l'élément d'attaque et l'extrémité libre de la douille 17 de la pièce d'accostage pour bloquer en permanence l'organe de couplage 18 (plus particulièrement le jonc de celui-ci) entre le flanc d'action 46 de la gorge 44 et la portée 19 de la douille de la pièce d'accostage.

Le flanc 46 est conformé pour épouser la forme du jonc 18. Bien entendu on peut inverser les structures, la portée 19 étant conformée pour épouser la forme du jonc 18, le flanc d'action 46 étant alors de forme tronconique.

Comme le montre la figure 2, ces moyens élastiques de maintien sont ici prémontés dans la gorge 44, ici rallongée en direction des billes du roulement à billes 22, formant également gorge de maintien avant l'assemblage des deux sous-ensembles définis ci-dessus. Ces moyens élastiques 55 sont ainsi intercalés axialement entre l'extrémité de plus petit diamètre de ladite pièce d'accostage 15 et le flanc 58 de la gorge 44 opposé au flanc 46 sur lequel prend appui l'organe de verrouillage 18. Le flanc 58 est plus près des billes du roulement à billes 22.

Le flanc 58 forme donc une face de butée pour les moyens élastiques de maintien 55 et le flanc 46 une face de contrebutée pour prémontage desdits moyens élastiques 55 et rendent ceux-ci imperdables avant attelage de la butée 11 à la pièce d'accostage 15 formant élément de liaison.

Selon une caractéristique remarquable de l'invention, ces moyens élastiques de maintien consistent en une rondelle élastique ondulée 56, ouverte circonférentiellement, dont les extrémités 57, 58 peuvent être écartées axialement (figure 4) pour permettre sa mise en place dans la gorge 44. Dans l'exemple représenté sur les figures 1 à 4, la rondelle élastique comporte plus d'une spire à ondulations (en fait un peu moins de deux spires complètes) et les ondulations 59 sont telles que les contacts entre spires s'établissent crête à crête, c'est-à-dire sensiblement entre des extremum desdites ondulations. On désigne ici par ondulation une période complète du profil quasi sinusoïdal de la rondelle.

Le diamètre intérieur d de la rondelle à l'état non contraint (à l'état prémonté avant montage des deux sous-ensembles) est sensiblement égal (à un faible jeu près) au diamètre de fond de la gorge 44, comme cela apparaît notamment sur la figure 2. En revanche, lorsque la rondelle ondulée est contrainte, après assemblage des sous-ensembles (figure 1), le rapprochement axial des spires montées crête à crête provoque un très léger jeu diamétral supplémentaire sans que la rondelle puisse normalement s'échapper de la gorge 44. En variante, le diamètre intérieur de ladite rondelle 56 à l'état non contraint pourrait être légèrement inférieur au diamètre du fond de la gorge 44, pour un montage serré de ladite rondelle.

Dans les deux cas la rondelle ondulée est prémontée de manière imperdable sur la butée 11 et ce sans risque d'extraction même lors de mauvaises manipulations du fait que la rondelle 56 est centrée de manière améliorée par le fond de la gorge 44.

Dans l'exemple représenté, la rondelle comporte quatre ondulations 59 sur un tour complet, ce qui détermine circonférentiellement entre les spires quatre espaces 60 déformables axialement. En variante la rondelle comporte deux ondulations, voir trois ou plus de quatre ondulations.

Comme le montrent les figures 3 et 4, la rondelle est ici constituée d'un fil d'acier plat - de section rectangulaire - enroulé avec ondulation de façon que sa partie plate s'étende globalement approximativement transversalement à l'axe de rotation de la butée. La rondelle ainsi conformée pourrait être en matière plastique.

En outre, on remarque que le flanc 58, formant face de butée, contre lequel prend appui ladite rondelle (c'est-à-dire le flanc opposé à celui 46 contre lequel s'applique l'organe de verrouillage 19) est un flanc à front raide.

Dans la variante de la figure 5, on remarque que la rondelle élastique 56a comporte au moins une spire d'extrémité non ondulée 65, c'est-à-dire une spire plate dont le diamètre intérieur ne change pas à l'état contraint. La rondelle est montée pour que cette spire vienne en appui contre le flanc 58 de la gorge. Du fait que cette partie de la rondelle est plate, la spire n'augmente pas de diamètre à l'état contraint, elle reste donc en contact avec le fond de la gorge, ce qui élimine tout risque de voir la rondelle échapper de la gorge, sous la sollicitation axiale de la pièce d'accostage 15. D'autre part, le centrage de la rondelle élastique est amélioré.

Dans l'exemple représenté, la rondelle élastique comporte deux spires d'extrémité non ondulée, ce qui évite une indexation au montage.

Bien entendu l'élément d'attaque peut comporter axialement deux gorges à savoir une gorge 144 de montage du jonc 18, proche de l'extrémité libre de l'élément d'attaque 38, et une gorge de maintien 244 de la rondelle élastique ondulée 56, proche des billes du roulement à billes 22. Ici la portée tronconique d'engagement 40 se raccorde à une portée cylindrique 140 d'orientation axiale. Le flanc d'action 46 pour le jonc 18 se raccorde à la portée 140 et constitue le flanc de la gorge 144, dont l'autre flanc est constitué par une portée ici tronconique 146 se raccordant à une portée cylindrique 240 d'orientation axiale se raccordant à la gorge de maintien 244 de la rondelle élastique ondulée 56. Plus précisément la portée cylindrique 240 est ici de même diamètre que la portée 140 et se raccorde à la face de contrebutée 246 constituant l'un des flancs de la gorge 244 dont l'autre flanc est constitué par la face de butée 258.

Ces deux gorges 144,244 comportent un fond cylindrique d'orientation axiale, la gorge de maintien 244 étant plus longue axialement que la gorge de montage 144 du jonc 18. Les portées 140,240 sont telles qu'elles puissent se monter au jeu de montage près à l'intérieur de la portion extrême de plus petit diamètre de la douille 17.

La gorge 244 est plus éloignée axialement de l'extrémité libre 40 de l'élément d'attaque 38. Les fonds des gorges 144,244 peuvent avoir le même diamètre mais il n'en est pas nécessairement ainsi. Le fond de la gorge 244 peut être de diamètre différent de celui de la gorge 144, par exemple de diamètre supérieur. Cette disposition permet d'augmenter la résistance de la bague interne du roulement plus épaisse au niveau des billes dudit roulement, qu'à l'extrémité libre 40 de l'élément d'attaque 38.

En effet la rondelle élastique de maintien 56 ou 56a peut être montée, à l'état non contraint, serrée ou non serrée dans le fond de la gorge 244 et être non serrée dans le fond de la gorge 144 lors du montage de la rondelle de maintien 58 sur l'élément d'attaque. Cette disposition favorise le montage de ladite rondelle ondulée.

On notera que le flanc tronconique 146, donc incliné, facilite le passage de la rondelle ondulée 56. Bien entendu la présence de ce flanc 146 n'est pas obligatoire puisque le montage de la rondelle ondulée 56,56a sur le roulement est réalisé par "vissage". De même le flanc de butée de la gorge de maintien peut être formé à la faveur du changement d'épaisseur de l'élément d'attaque 38 ou en variante à la faveur dudit changement d'épaisseur et d'une rondelle rapportée.

Bien entendu on peut inverser les structures, la bague extérieure pouvant être tournante et la bague intérieure non tournante. D'autre part l'élément d'attaque peut être en forme de douille rapporté sur la bague extérieure ou intérieure du roulement.

Un exemple de réalisation est donné par exemple dans le document FR-B-2 681 392 auquel on pourra se reporter.

Dans tous les cas le nez 42 de l'élément d'attaque 38 est profilé pour faciliter le montage de la rondelle ondulée 56. En variante les doigts 13 peuvent être reliés à une partie périphérique en forme de rondelle n'exerçant pas de charge et agissant sur une rondelle Belleville exerçant la force de serrage au sein de l'embrayage.

Bien entendu le diamètre interne de la rondelle ondulée 56 est inférieur au diamètre extérieur de l'élément d'attaque, en particulier le diamètre intérieur de la rondelle ondulée 56 est inférieur au diamètre externe des portées 140,240.

## Revendications

1. Montage de butée de débrayage comprenant un organe débrayeur (12) d'un embrayage, une butée de débrayage (11) couplée audit organe débrayeur par l'intermédiaire d'une pièce d'accostage (15) montée sur ledit organe débrayeur et présentant une partie en forme de douille entourant un élément d'attaque (38) en forme de manchon de ladite butée de débrayage, ledit élément d'attaque comportant une extrémité libre (40), un organe de verrouillage (18) porté intérieurement par ladite pièce d'accostage pour solidarisation en rotation de celle-ci audit élément d'attaque, cet organe de verrouillage comportant une partie en forme de jonc annulaire interposée axialement entre une portée de ladite douille et un flanc d'action (46) d'une gorge de montage (44,144) pratiquée dans une partie de l'élément d'attaque qui pénètre axialement dans ladite douille et des moyens élastiques de maintien (55) prémontés dans une gorge de maintien (44,244) que présente l'élément d'attaque (38) et agissant axialement entre ladite pièce d'accostage et une face de butée (58,258), formant le flanc de la gorge de maintien (44,244) le plus éloigné de l'extrémité libre (40) de l'élément d'attaque (38), pour bloquer en permanence ledit organe de couplage entre ledit flanc d'action (46) et la portée de ladite douille, **caractérisé en ce que** lesdits moyens élastiques de maintien comportent une rondelle élastique ondulée (56), ouverte, dont les extrémités peuvent être écartées pour permettre sa mise en place dans la gorge de maintien (44,244) et **en ce que** le diamètre intérieur de ladite rondelle (56) à l'état non contraint est sensiblement inférieur ou égal au diamètre de fond de la gorge de maintien (144,244), pour un montage serré de ladite rondelle.

2. Montage de butée selon la revendication 1, **caractérisé en ce que** ladite rondelle élastique (56) comporte plus d'une spire à ondulations (59) et que des contacts entre spires s'établissent sensiblement entre des extremum desdites ondulations.

3. Montage de butée selon l'une quelconque des revendications précédentes, **caractérisé en ce que**, sur un tour complet, ladite rondelle comporte au moins deux ondulations.

4. Montage de butée selon l'une quelconque des revendications précédentes, **caractérisé en ce que** ladite rondelle est constituée d'un fil plat, métallique ou en matière plastique, enroulé avec ondulations de façon que sa partie plate s'étende globalement transversalement à l'axe de rotation de ladite butée.

5. Montage de butée selon l'une quelconque des revendications précédentes, **caractérisé en ce que** ladite gorge de maintien (44) est constituée par la gorge de montage (44) du jonc (18) et **en ce que** ladite rondelle prend appui contre le flanc (58) de ladite gorge opposée, à celui contre lequel s'applique l'organe de verrouillage et **en ce que** ce flanc est à front raide.

6. Montage de butée selon l'une quelconque des revendications précédentes, **caractérisé en ce que** la gorge de maintien (244) est distincte de la gorge de montage (144) du jonc (18).

7. Montage de butée selon la revendication 6, **caractérisé en ce que** le diamètre du fond de la gorge de maintien (244) est supérieur au diamètre du fond de la gorge de montage (144).

8. Montage de butée selon l'une quelconque des revendications précédentes, **caractérisé en ce que** ladite rondelle élastique (56a) comporte au moins une spire d'extrémité non ondulée (65), ladite rondelle étant montée pour que cette spire vienne en appui contre le flanc (58) de ladite gorge, opposé à celui contre lequel s'applique l'organe de verrouillage.

9. Montage de butée selon la revendication 8, **caractérisé en ce que** ladite rondelle élastique (56a) comporte deux spires d'extrémité non ondulée (65).

## Patentansprüche

1. Ausrücklageranordnung, umfassend ein Ausrückorgan (12) einer Kupplung, ein Ausrücklager (11), das mit dem Ausrückorgan über einen Anlagering (15) verbunden ist, der an dem Ausrückorgan angebracht ist und einen Teil in Form einer Hülse aufweist, der ein in Form einer Muffe ausgeführtes Angriffselement (38) des Ausrücklagers umgibt, wobei das Angriffselement ein freies Ende (40) umfaßt, ein Verriegelungsorgan (18), das innen an dem Anlagering angebracht ist, um diesen drehfest mit dem Angriffselement zu verbinden, wobei dieses Verriegelungsorgan einen Teil in Form eines ringförmigen Sprengrings umfaßt, der axial zwischen einer Auflagefläche der besagten Hülse und einer Wirkflanke (46) einer Einbauauskehlung (44, 144) eingefügt ist, die in einen Teil des Angriffselements eingearbeitet ist, der axial in die Hülse eindringt, und elastische Haltemittel (55), die in einer Halteauskehlung (44, 244), die das Angriffselement (38) aufweist, vormontiert sind und axial zwischen dem Anlagering und einer Anschlagfläche (58, 258) wirken, welche die axial am weitesten vom freien Ende (40) des Angriffselements (38) entfernte Flanke der Halteauskehlung (44, 244) bildet, um das Verbindungsorgan ständig zwischen der Wirkflanke (46) und der Auflagefläche der Hülse zu sichern,
**dadurch gekennzeichnet,**
**daß** die elastischen Haltemittel eine offene, gewellte Federscheibe (56) umfassen, deren Enden abgespreizt werden können, um ihr Einsetzen in der Halteauskehlung (44, 244) zu ermöglichen,
und **daß** der Innendurchmesser der Federscheibe (56) im unbelasteten Zustand etwas kleiner oder gleich dem Bodendurchmesser der Halteauskehlung (144, 244) ist, um eine eingespannte Anbringung der Federscheibe herbeizuführen.

2. Ausrücklageranordnung nach Anspruch 1, **dadurch gekennzeichnet, daß** die Federscheibe (56) mehr als eine Windung mit Wellungen (59) umfaßt und daß die Kontakte zwischen den Windungen in etwa zwischen Extremen der besagten Wellungen bestehen.

3. Ausrücklageranordnung nach einem der vorangehenden Ansprüche, **dadurch gekennzeichnet, daß** die Federscheibe auf einem vollständigen Umfang wenigstens zwei Wellungen umfaßt.

4. Ausrücklageranordnung nach einem der vorangehenden Ansprüche, **dadurch gekennzeichnet, daß** die Federscheibe aus einem Flachdraht, aus Metall oder aus Kunststoff besteht, der mit Wellungen aufgerollt ist, so daß sich sein flacher Teil insgesamt quer zur Drehachse des Ausrücklagers erstreckt.

5. Ausrücklageranordnung nach einem der vorangehenden Ansprüche, **dadurch gekennzeichnet, daß** die Halteauskehlung (44) aus der Einbauauskehlung (44) des Sprengrings (18) besteht und daß die Federscheibe an der Flanke (58) zur Anlage kommt, die der Flanke gegenüberliegt, an der das Verriegelungsorgan anliegt, und daß diese Flanke steil ansteigend ist.

6. Ausrücklageranordnung nach einem der vorangehenden Ansprüche, **dadurch gekennzeichnet, daß** die Halteauskehlung (244) von der Einbauauskehlung (144) des Sprengrings (18) verschieden ist.

7. Ausrücklageranordnung nach Anspruch 6, **dadurch gekennzeichnet, daß** der Durchmesser des Bodens der Halteauskehlung (244) größer als der Durchmesser des Bodens der Einbauauskehlung (144) ist.

8. Ausrücklageranordnung nach einem der vorangehenden Ansprüche, **dadurch gekennzeichnet, daß** die Federscheibe (56a) wenigstens eine nicht gewellte Abschlußwindung (65) umfaßt, wobei die Federscheibe so eingesetzt ist, daß diese Windung an der Flanke (58) der Auskehlung zur Anlage kommt, die der Flanke gegenüberliegt, an der das Verriegelungsorgan anliegt.

9. Ausrücklageranordnung nach Anspruch 8, **dadurch gekennzeichnet, daß** die Federscheibe (56a) zwei nicht gewellte Abschlußwindungen (65) umfaßt.

## Claims

1. A clutch release bearing assembly comprising a declutching member (12) of a clutch, a clutch release bearing (11) which is coupled to the said declutching member by an interposed coupling piece (15) mounted on the said declutching member and including a sleeve portion which surrounds an actuating element (38), in the form of a sleeve, of the said clutch release bearing, the said actuating element having a free end (40), a locking member (18) carried internally by the said coupling piece for coupling the latter in rotation to the said actuating member, the said locking member being a component in the form of an annular ring interposed between a surface of the said sleeve portion and a thrust flank (46) of a fitting groove (44, 144) formed in a portion of the actuating element that penetrates axially into the said sleeve portion, and elastic retaining means (55) pre-fitted in a retaining groove (44, 244) formed in the actuating element (38) so as to act axially between the said coupling piece and an abutment face (58, 258) which constitutes the flank of the retaining groove (44, 244) furthest away from the free end (40) of the actuating element (38), whereby to trap the said coupling member between the said thrust flank (46) and the surface of the said sleeve portion, **characterised in that** the said elastic retaining means comprise an open corrugated elastic ring (56), the ends of which are adapted to be moved apart to enable it to be fitted in the retaining groove (44, 244), and **in that** the internal diameter of the said ring (56) in the unstressed state is substantially smaller than, or equal to, the base diameter of the retaining grove (144, 244), whereby the said ring is mounted in a gripped condition.

2. A release bearing assembly according to Claim 1, **characterised in that** the said elastic ring (56) consists of more than one turn with corrugations (59),and **in that** contact of one turn with another occurs substantially between the peaks of the said corrugations.

3. A release bearing assembly according to either one of the preceding Claims, **characterised in that** the said ring has at least two corrugations on a complete turn.

4. A release bearing according to any one of the preceding Claims, **characterised in that** the said ring is made from a flat strip, of metal or plastics, by rolling with corrugations in such a way that its flat portion is generally transverse to the axis of rotation of the said bearing.

5. A release bearing assembly according to any one of the preceding Claims, **characterised in that** the said retaining groove (44) is the fitting groove (44) for the locking member (18), and **in that** the said ring bears against the flank (58) of the said groove opposite the groove against which the locking member is engaged, and **in that** this flank has a steep face.

6. A release bearing assembly according to any one of the preceding Claims, **characterised in that** the retaining groove (244) is separate from the fitting groove (144) for the locking member (18).

7. A release bearing assembly according to Claim 6, **characterised in that** the diameter of the base of the retaining groove (244) is greater than the diameter of the base of the fitting groove (144).

8. A release bearing assembly according to any one of the preceding Claims, **characterised in that** the said elastic ring (56a) has at least one uncorrugated end turn (65), the said ring being mounted in such a way that the said turn comes into engagement with the flank (58) of the said groove opposite the flank against which the locking member bears.

9. A release bearing assembly according to Claim 8, **characterised in that** the said elastic ring (56a) has two uncorrugated end turns (65).
